# EUROPEAN PATENT SPECIFICATION

(11) **EP 1 354 911 B1**
(45) Date of publication and mention of the grant of the patent: **21.03.2007**
(21) Application number: 03008284.6
(22) Date of filing: 09.04.2003
(51) Int. Cl.: C08J 7/04, B05D 7/00, C09D 5/00

(54) **process for formation of coating film on plastic material and coated article**
Verfahren zum Beschichten von Kunstoffmaterial mit einem Überzugsfilm sowie beschichteter Artikel
Méthode pour la formation de matière plastique avec un film de revêtement et article ainsi revêtu

(30) Priority: 15.04.2002 JP 2002112732
(43) Date of publication of application: 22.10.2003
(73) Proprietor: Nippon Paint Co., Ltd., Osaka-shi, Osaka 531-8511 (JP); HONDA GIKEN KOGYO KABUSHIKI KAISHA, Minato-ku, Tokyo 107-0062 (JP)
(72) Inventor: Masuda, Kazuaki, c/o Nippon Paint Co., Ltd., Neyagawa-shi, Osaka 572-8501 (JP); Kobayashi, Seiji, c/o Nippon Bee Chemical Co., Ltd, Hirakata-shi, Osaka 573-1153 (JP); Takenaka, Hiroyuki, c/o Nippon Bee Chem. Co., Ltd, Hirakata-shi, Osaka 573-1153 (JP); Nakaoka, Ryoichi, c/o Nippon Bee Chem. Co., Ltd, Hirakata-shi, Osaka 573-1153 (JP); Mizuguchi, Katsumi, c/o Nippon Bee Chem. Co., Ltd, Hirakata-shi, Osaka 573-1153 (JP); Ogawa, Takeshi, c/o K. K. Honda Gijitsu Kenkyusho, Wako-shi, Saitama 351-0113 (JP)
(74) Representative: Henkel, Feiler & Hänzel

(56) References cited:
- EP-A- 0 466 136
- GB-A- 2 351 680
- US-A- 5 767 188
- US-B1- 6 344 500

## Description

### BACKGROUND OF THE INVENTION

### A. TECHNICAL FIELD

The present invention relates to: a process for formation of a coating film on a plastic material, which process enables formation of an excellent coating film on the plastic material (e.g. polypropylene resins) with good productivity; and a coated article as obtained by this process.

### B. BACKGROUND ART

In recent years, the conversion into an aqueous paint is studied in order to decrease an amount of an organic solvent in the paint in consideration of the influence upon environments. In the coating of various automobile parts, it is general that: a base coating film is formed by a base paint, and a clear coating film is further formed thereon by a clear paint. In this system, the conversion of the base paint into an aqueous one is variously studied.

As such aqueous base paints, there are known, for example, an aqueous base coating composition including a core-shell emulsion resin that makes good appearance after the coating (refer to JP-A-240791/2001), a thermosetting aqueous coating composition that is excellent in low-temperature curability wherein the composition includes a polyether-modified carbodiimide (refer to JP-A-011151/2001), and an aqueous metallic base paint that can form a good-appearance coating film wherein the composition includes a polycarbodiimide compound and a carboxyl-group-containing aqueous resin (refer to JP-A-009357/2001).

On the other hand, plastic materials used for such as automobile bumpers generally have bad paint wettability, and are inferior in coatability. Therefore, a method that involves coating an aqueous primer is usually carried out before the above paint is coated onto the plastic material.

As such an aqueous primer for such as enhancing the adhesion sufficiently, there is disclosed a primer including a modified chlorinated polyolefin as obtained by modifying a chlorinated polyolefin with an unsaturated polycarboxylic acid and/or an acid anhydride (e.g. JP-A-182534/1991). However, the modification with the unsaturated polycarboxylic acid and/or the acid anhydride having high water solubility has had a demerit of deteriorating the humidity-resisting adhesion. In addition, it is disclosed that various performance as the aqueous primer can be enhanced by combining the modified chlorinated polyolefin with such as various other resins and using them together. For the purpose of enhancing the paint stability and the performance of coating films, JP-A-072337/1992, for example, discloses an aqueous primer including a modified chlorinated polyolefin, and besides, a urethane resin and an epoxy resin. However, the gasohol resistance has not been sufficient in this case. In addition, Japanese Patent No. 3203881 discloses an aqueous primer including a chlorinated polyolefin, and beside, an aqueous acrylic resin and a urethane resin, but the humidity-resisting adhesion and the gasohol resistance have not been sufficient.

In the coating of the plastic material, the above aqueous primer, base paint, and clear paint are usually used, and a primer coating film as obtained is baking-treated after the coating of the aqueous primer at first. Subsequently, the base paint and the clear paint to be overcoating paints are coated thereonto, and thereafter the resultant base-paint coating film and clear-paint coating film each are baking-treated separately or simultaneously, thereby forming a coating film on the surface of the plastic material.

In recent years, in view of further enhancing the productivity by shortening the coating steps and reducing the energy as used, there is considered a method that involves decreasing frequency of the baking treatment, namely, a method that involves: overcoating the aqueous primer, the base paint, and the clear paint, and then carrying out the baking treatment of the resultant three-layered coating film at the same time. However, the coating film as obtained by applying the above aqueous base paint and aqueous primer to this method has a demerit such that the coating film performance such as the appearance, the adhesion, the humidity-resisting adhesion, and the gasohol resistance is insufficient, and therefore its improvement is desired.

### SUMMARY OF THE INVENTION

### A. OBJECT OF THE INVENTION

An object of the present invention is to provide: a process for formation of a coating film on a plastic material, which process enables formation of the coating film with good productivity wherein the coating film is excellent in the adhesion, the humidity-resisting adhesion, and the gasohol resistance, and has good appearance; and a coated article.

### B. DISCLOSURE OF THE INVENTION

The present inventors have diligently studied various experiments in order to solve the above-mentioned problems. As a result, they have found out that a coating film is obtained in the case where the baking treatment of a three-layered coating film as obtained by coating a plastic material with a specific aqueous primer coating composition and a specific aqueous base paint composition in order, and finally overcoating the resultant base coating film with a clear paint is carried out at the same time, wherein the coating film is excellent in the adhesion, the humidity-resisting adhesion, and the gasohol resistance, and has good appearance. Then, they have completed the present invention.

That is to say, a process for formation of a coating film on a plastic material, according to the present invention, comprises the steps of: coating the plastic material with an aqueous primer coating composition; and thereafter drying the resultant primer coating film in such a manner that its nonvolatile content will not be less than 70 weight %; and thereafter overcoating the primer coating film with an aqueous base paint composition; and thereafter drying the resultant base coating film in such a manner that its nonvolatile content will not be less than 60 weight %; and thereafter overcoating the base coating film with a two-component clear paint; and thereafter baking the resultant three-layered coating film onto the plastic material.

Herein, the aqueous base paint composition includes: an emulsion resin (a) as obtained by carrying out emulsion polymerization of an α,β-ethylenically unsaturated monomer mixture having a nonvolatile acid value of 3 to 50 mgKOH/g; a water-soluble (meth)acrylic resin (b) having a nonvolatile acid value of 110 to 200 mgKOH/g; and a polyether-modified carbodiimide (c); wherein the α,β-ethylenically unsaturated monomer mixture includes a (meth)acrylate ester in an amount of not smaller than 65 weight % wherein the (meth)acrylate ester has an ester portion containing 1 or 2 carbon atoms; and wherein: the nonvolatile content of the (a) is in the range of 55 to 75 weight %, that of the (b) is in the range of 0.5 to 15 weight %, and that of the (c) is in the range of 15 to 44.5 weight %, relative to the total nonvolatile content of the (a) to (c).

And further, the aqueous primer coating composition includes an acid-anhydride-modified chlorinated polyolefin emulsion resin (A), an aqueous urethane dispersion (B), an aqueous epoxy resin (C), and an organic strong base and/or its salt (D), wherein: the nonvolatile content of the (A) is in the range of 20 to 60 weight %, that of the (B) is in the range of 10 to 40 weight %, that of the (C) is in the range of 20 to 60 weight %, and the (D) is in the range of 1 to 5 weight % relative to the total nonvolatile content of the (A), (B), and (C).

In addition, a coated article, according to the present invention, is a coated article obtained by the above process for formation of a coating film.

These and other objects and the advantages of the present invention will be more fully apparent from the following detailed disclosure.

### DETAILED DESCRIPTION OF THE INVENTION

Hereinafter, the aqueous primer coating composition and the aqueous base paint composition as used in the present invention are explained, and thereafter the present invention process for formation of a coating film on a plastic material is explained in detail.

### - Aqueous base paint composition -

The aqueous base paint composition as used in the present invention is an aqueous base paint composition including the emulsion resin (a), the water-soluble (meth)acrylic resin (b), and the polyether-modified carbodiimide (c). Hereinafter, each component as included in this aqueous base paint composition is explained.

### [Emulsion resin (a)]:

The emulsion resin (a) is an emulsion resin as obtained by carrying out the emulsion polymerization of the α,β-ethylenically unsaturated monomer mixture, and is used as a film-formable component of the aqueous base paint composition and is excellent in the adhesion.

The α,β-ethylenically unsaturated monomer mixture includes a (meth)acrylate ester in an amount of not smaller than 65 weight % wherein the (meth)acrylate ester has an ester portion (alkyl ester portion) containing 1 or 2 carbon atoms. In the case where the combining ratio of the (meth)acrylate ester is less than 65 weight %, the appearance of the coating film as obtained is deteriorated. Examples of the above (meth)acrylate ester having the ester portion containing 1 or 2 carbon atoms include methyl (meth)acrylate, and ethyl (meth)acrylate. Incidentally, the (meth)acrylate ester means both the acrylate ester and the methacrylate ester in the present specification.

In addition, this α,β-ethylenically unsaturated monomer mixture has a nonvolatile acid value of 3 to 50, favorably 7 to 40 (Hereinafter, in the present specification, "a nonvolatile acid value" is simply referred as "an acid value". In addition, "mgKOH/g" is omitted, wherein the "mgKOH/g" is a unit of the nonvolatile acid value.). In the case where the acid value is less than 3, the workability cannot be improved. On the other hand, in the case where the acid value is more than 50, the water resistance of the coating film is deteriorated.

The aqueous base paint composition has curability, and therefore the α,β-ethylenically unsaturated monomer mixture favorably has a nonvolatile hydroxyl-group value of 10 to 150, more favorably 20 to 100 (Hereinafter, in the present specification, "a nonvolatile hydroxyl-group value" is simply referred as "a hydroxyl-group value". In addition, "mgKOH/g" is omitted, wherein the "mg KOH / g" is a unit of the nonvolatile hydroxyl-group value.). In the case where the hydroxyl-group value is less than 10, there is a tendency such that the curability is not obtained sufficiently. On the other hand, in the case where the hydroxyl-group value is more than 150, the water resistance of the coating film tends to deteriorate. In addition, the glass transition temperature of a polymer as obtained by copolymerizing the above α,β-ethylenically unsaturated monomer mixture is favorably in the range of -20 to 80 °C from the viewpoint of mechanical properties of the coating film as obtained.

The above α,β-ethylenically unsaturated monomer mixture can have the above acid value and hydroxyl-group value by including an α,β-ethylenically unsaturated monomer having an acid group or a hydroxyl group therein.

Examples of the above α,β-ethylenically unsaturated monomer having an acid group include acrylic acid, methacrylic acid, a dimer of acrylic acid, crotonic acid, 2-acryloyloxyethylphthalic acid, 2-acryloyloxyethylsuccinic acid, ω-carboxy-polycaprolactone mono(meth)acrylate, isocrotonic acid, α-hydro-ω-((1-oxo-2-propenyl)oxy) poly(oxy(1-oxo-1,6-hexanediyl)), maleic acid, fumaric acid, itaconic acid, 3-vinylsalicylic acid, 3-vinylacetylsalicylic acid, 2-acryloyloxyethyl acid phosphate, and 2-acrylamide-2-methylpropanesulfonic acid. Among these, the acrylic acid, the methacrylic acid, and the dimer of acrylic acid are favorable.

Examples of the α,β-ethylenically unsaturated monomer having a hydroxyl group include hydroxyethyl (meth)acrylate, hydroxypropyl (meth)acrylate, hydroxybutyl (meth)acrylate, allyl alcohol, methacryl alcohol, and adducts of hydroxyethyl (meth)acrylate and ε-caprolactone. Among these, the hydroxyethyl (meth)acrylate, the hydroxybutyl (meth)acrylate, and the adducts of hydroxyethyl (meth)acrylate and ε-caprolactone are facvorable.

In addition, the above α,β-ethylenically unsaturated monomer mixture may further include other α,β-ethylenically unsaturated monomer. Examples of the above other α,β-ethylenically unsaturated monomer include: (meth)acrylate esters having an ester portion containing not smaller than 3 carbon atoms (e.g. n-butyl (meth)acrylate, isobutyl (meth)acrylate, t-butyl (meth)acrylate, 2-ethylhexyl (meth)acrylate, lauryl methacrylate, phenyl acrylate, isobomyl (meth)acrylate, cyclohexyl methacrylate, t-butylcyclohexyl (meth)acrylate, dicyclopentadienyl (meth)acrylate, and dihydrodicyclopentadienyl (meth)acrylate); polymerizable amide compounds (e.g. (meth)acrylamide, N-methylol(meth)acrylamide, N-butoxymethyl(meth)acrylamide, N,N-dimetyl(meth)acrylamide, N,N-dibutyl(meth)acrylamide, N,N-dioctyl(meth)acrylamide, N-monobutyl(meth)acrylamide, N-monooctyl(meth)acrylamide 2,4-dihydroxy-4'-vinylbenzophenone, N-(2-hydroxyethyl)acrylamide, and N-(2-hydroxyethyl)methacrylamide); polymerizable aromatic compounds (e.g. styrene, α-methylstyrene, vinylketone, t-butylstyrene, p-chlorostyrene, and vinylnaphthalene); polymerizable nitriles (e.g. acrylonitrile, and meth acrylonitrile); α-olefin (e.g. ethylene, and propylene); vinyl esters (e.g. vinyl acetate, and vinyl propionate); and dienes (e.g. butadiene, and isoprene). These can be selected according to the object, but the (meth)acrylamide is favorable in the case of easily giving hydrophilicity.

Incidentally, it must be arranged that the content of the above α,β-ethylenically unsaturated monomer other than these (meth)acrylate esters having an ester portion containing 1 or 2 carbon atoms should be less than 35 weight % of the above α,β-ethylenically unsaturated monomer mixture.

The emulsion resin (a) in the aqueous base paint composition is obtained by carrying out the emulsion polymerization of the α,β-ethylenically unsaturated monomer mixture. Herein, the emulsion polymerization can usually be carried out by using well-known methods. Specifically, the emulsion polymerization can be carried out by dissolving an emulsifier in water (or in an aqueous medium including an organic solvent (e.g. alcohols) when the occasion demands), and then dropwise adding the above α,β-ethylenically unsaturated monomer mixture and a polymerization initiator thereto under heat-stirred conditions. An α,β-ethylenically unsaturated monomer mixture as emulsified beforehand by using an emulsifier and water may be dropwise added thereto similarly.

Examples of the polymerization initiator include: oily azo compounds (e.g. azobisisobutyronitrile, 2,2'-azobis(2-methylbutyronitrile), and 2,2'-azobis(2,4-dimethylvaleronitrile)); aqueous compounds (e.g. aqueous anionic compounds, such as 4,4'-azobis(4-cyanovaleric acid), and 2,2-azobis(N-(2-carboxyethyl)-2-methylpropionamidine; and aqueous cationic compounds such as 2,2'-azobis(2-methylpropionamidine)); and oily redox peroxides (e.g. benzoyl peroxide, p-chlorobenzoyl peroxide, lauroyl peroxide, and t-butyl perbenzoate); and aqueous peroxides (e.g. potassium persulfate, and ammonium persulfate).

Usable as the emulsifiers are emulsifiers as usually used by a person with ordinary skill. Particularly favorable are reactive emulsifiers, such as Antox MS-60 (produced by Nippon Nyukazai Co., Ltd.), Eleminol JS-2 (produced by Sanyo Chemical Industries, Ltd.), Adecaliasoap NE-20 (produced by Asahi Denka Co., Ltd.), and Aqualon HS-10 (produced by Dai-ichi Kogyo Seiyaku Co., Ltd.).

In addition, chain transfer agents, such as mercaptans (e.g. lauryl mercaptan) and a dimer of α-methylstyrene can be used for adjusting a molecular weight when the occasion demands.

The reaction temperature is determined depending upon the initiator. The reaction temperature is, for example, favorably in the range of 60 to 90 °C in the case of the azo initiators and in the range of 30 to 70 °C in the case of the redox initiators. The reaction time is generally in the range of 1 to 8 hours. The ratio of the initiator is generally in the range of 0.1 to 5 weight %, favorably 0.2 to 2 weight %, relative to the entirety of the α,β-ethylenically unsaturated monomer mixture.

The above emulsion polymerization can be carried out in a multistage step, for example, two steps. Specifically, the emulsion polymerization of a portion of the above α,β-ethylenically unsaturated monomer mixture (α,β-ethylenically unsaturated monomer mixture 1) is carried out at first, and then the emulsion polymerization can be carried out by further adding the residue of the above α,β-ethylenically unsaturated monomer mixture (α,β-ethylenically unsaturated monomer mixture 2) thereto.

Herein, the α,β-ethylenically unsaturated monomer mixture 1 favorably includes an α,β-ethylenically unsaturated monomer having an amide group, from the viewpoint of inhibition of compatibility between a clear coating film and a base coating film as obtained from the aqueous base paint composition (inhibition of mixing coating films). In addition, then, the α,β-ethylenically unsaturated monomer mixture 2 more favorably includes no α,β-ethylenically unsaturated monomer having an amide group. Incidentally, the mixture as obtained by blending the α,β-ethylenically unsaturated monomer mixtures 1 and 2 together is the above α,β-ethylenically unsaturated monomer mixture, and therefore satisfied is the requirement of the above α,β-ethylenically unsaturated monomer mixture as shown above.

The above emulsion resin as obtained in this way favorably has a particle diameter of 0.01 to 1.0 µm. In the case where the particle diameter is smaller than 0.01 µm, there is a tendency such that the effect of improving the workability is small. In the case where the particle diameter is larger than 1.0 µm, there is a tendency such that the appearance of the coating film as obtained is deteriorated. The adjustment of this particle diameter can be carried out by adjusting such as monomer composition and conditions of the emulsion polymerization.

The above emulsion resin (a) can be used in the pH range of 5 to 10 by carrying out neutralization with a base when the occasion demands. This is because the stability is high in this pH range. This neutralization is favorably carried out by adding tertiary amines (e.g. dimethylethanolamine and triethylamine) before or after the emulsion polymerization.

### [Water-soluble (meth)acrylic resin (b)]:

The water-soluble (meth)acrylic resin (b) is used as a pigment dispersant, and can enhance its tinting strength in a small amount. In addition, the storage stability of the aqueous base paint composition as obtained is enhanced by combining the water-soluble (meth)acrylic resin (b) with the polyether-modified carbodiimide (c).

The water-soluble (meth)acrylic resin (b) has an acid value of 110 to 200, favorably 130 to 180. In the case where the water-soluble (meth)acrylic resin (b) has an acid value of less than 110, the combining ratio of the water-soluble (meth)acrylic resin (b) as used for stably dispersing the pigment is increased. On the other hand, in the case where the water-soluble (meth)acrylic resin (b) has an acid value of more than 200, the hydrophilicity is so high that the humidity-resisting adhesion of the coating film is deteriorated.

The water-soluble (meth)acrylic resin (b) favorably has a molecular weight of 3,000 to 50,000, more favorably 6,000 to 30,000. In the case where the water-soluble (meth)acrylic resin (b) has a molecular weight of smaller than 3,000, there is a tendency such that: the curability is insufficient, and the humidity-resisting adhesion is deteriorated. On the other hand, in the case where the water-soluble (meth)acrylic resin (b) has a molecular weight of larger than 50,000, there is a tendency such that the viscosity of the water-soluble (meth)acrylic resin (b) is so high that the water-soluble (meth)acrylic resin (b) is difficult to mix.

The hydroxyl-group value of the water-soluble (meth)acrylic resin (b) is favorably adjusted to the range of 0 to 180 when the occasion demands.

The water-soluble (meth)acrylic resin (b) is, for example, a water-soluble resin as obtained by polymerizing the above α,β-ethylenically unsaturated monomer having an acid group. In addition, the water-soluble (meth)acrylic resin (b) may be obtained by copolymerizing a monomer component including: the above α,β-ethylenically unsaturated monomer; and further such as styrene, maleate esters, maleic anhydride, and itaconic anhydride.

### [Polyether-modified carbodiimide (c)]:

The polyether-modified carbodiimide (c) enables low-temperature curing, and is a crosslinking agent for enhancing the humidity-resisting adhesion of the coating film as obtained. In the aqueous base paint composition as used in the present invention, the polyether-modified carbodiimide (c) is used in the form of its water dispersion.

The polyether-modified carbodiimide (c) has a carbodiimide unit and a polyol unit that are alternately repeated through a urethane bond thereby continuously existing. In addition, the polyether-modified carbodiimide (c) has hydrophilic polyether units at both ends of its molecule, and has a structure such that the above polyether unit is bonded to the above carbodiimide unit through the urethane bond.

The carbodiimide unit constituting the polyether-modified carbodiimide (c) is, for example, a unit as obtained by removing isocyanate groups from a polycarbodiimide compound containing at least two isocyanate groups per molecule, and the carbodiimide unit means a unit of -(-N=C=N-R¹-)ₙ- (where: R¹ may be a saturated or unsaturated hydrocarbon group that may contain a nitrogen atom and/or an oxygen atom; and n denotes a polymerization degree, and is a natural number of 2 to 20).

The above carbodiimide compound contains at least two isocyanate groups per molecule, but is favorably a carbodiimide compound containing isocyante groups at its both end from the viewpoint of reactivity. As to a method for producing the above carbodiimide compound containing isocyante groups at its both end, usable is a method as well known for a person with ordinary skill, for example, a condensation reaction accompanying decarboxylation of an organic diisocyanate.

As to the above organic diisocyanate, an aromatic diisocyanate, an aliphatic diisocyanate, an alicyclic diisocyanate, and mixtures thereof are specifically usable. Specific examples thereof include 1,5-naphthalene diisocyanate, 4,4-diphenylmethane diisocyanate, 4,4-diphenyldimethylmethane diisocyanate, 1,3-phenylene diisocyanate, 1,4-phenylene diisocyanate, 2,4-tolylene diisocyanate, 2,6-tolylene diisocyanate, mixtures of 2,4-tolylene diisocyanate and 2,6-tolylene diisocyanate, hexamethylene diisocyanate, cyclohexane-1,4-diisocyanate, xylylene diisocyanate, isophorone diisocyanate, dicyclohexylmethane-4,4-diisocyanate, methylcyclohexane diisocyanate, and tetramethylxylylene diisocyanate.

In the above condensation reaction, carbodiimidation catalysts are usually used. Specific examples of the above carbodiimidation catalysts include phosporene oxides, such as 1-phenyl-2-phosphorene-1-oxide, 3-methyl-2-phosphorene-1-oxide, 1-ethyl-2-phosphorene-1-oxide, 3-methyl-1-phenyl-2-phosphorene-1-oxide, and 3-phosphorene isomers thereof. The 3-methyl-1-phenyl-2-phosphorene-1-oxide is favorable from the viewpoint of reactivity.

The polyol unit constituting the polyether-modified carbodiimide (c) means, for example, a unit as obtained by removing active hydrogen from a polyol containing at least two hydroxyl groups per molecule.

There is no especial limitation on the above polyol, but the polyol favorably has a number-average molecular weight of 300 to 5,000 from the viewpoint of reaction efficiency. Specific examples of this polyol include polyether diols, diols of polyester, and polycarbonate diols. Specific examples thereof include: polyether diols, such as polyethylene glycol, polypropylene glycol, polyethylenepropylene glycol, polytetramethylene ether glycol, polyhexamethylene ether glycol, and polyoctamethylene ether glycol; diols of polyester, such as polyethylene adipate, polybutylene adipate, polyhexamethylene adipate, polyneopentyl adipate, poly-3-methylpentyl adipate, polyethylene/butylene adipate, and polyneopentyl/hexyl adipate; polylactone diols, such as polycaprolactone diol and poly-3-methylvalerolactone diol; and polycarbonate diols such as polyhexamethylene carbonate diol; and mixtures thereof.

In addition, the above carbodiimide unit and polyol unit constituting the polyether-modified carbodiimide (c) are alternately repeated through the urethane bond of-NHCO- thereby continuously existing. There is no especial limitation on the above repeating number, but the repeating number is favorably in the range of 1 to 10 from the viewpoint of reaction efficiency.

Furthermore, the polyether-modified carbodiimide (c) has the hydrophilic polyether units at both ends of its molecule, and the above polyether unit is bonded to the above carbodiimide unit through the urethane bond.

The polyether unit constituting the polyether-modified carbodiimide (c) means a unit as obtained by removing active hydrogen from the polyether containing the active hydrogen and a polyether portion.

Examples of the above polyether include: poly(ethylene oxide) or poly(propylene oxide) of which the terminal portion is blocked with a monoalkoxy group, as represented by R²-O-(CH₂-CH R³-O-)ₘ-H (where: R² is an alkyl group containing 1 to 20 carbon atoms; R³ is a hydrogen atom or a methyl group; or m is an integer of 4 to 30); and monoalkoxypolyalkylene glycols including mixtures thereof. Incidentally, the monoalkoxypolyalkylene glycols are favorable from the viewpoint of water resistance of the coating film as obtained. The above R³ is favorably a hydrogen atom from the viewpoint of water dispersibility. The carbon number of the R² and m in the above unit are each fitly set in the above range in consideration of the storage stability, the water dispersibility, and the reactivity after the evaporation of water.

Examples of the above monoalkoxypolyalkylene glycols include poly(oxyethylene) monomethyl ether, poly(oxyethylene) mono-2-ethylhexyl ether, and poly(oxyethylene) monolauryl ether.

There is no especial limitation on the method for producing the polyether-modified carbodiimide (c). The polyether-modified carbodiimide (c) is, for example, obtained by allowing the above polycarbodiimide compound to react with the above polyol under conditions where the ratio of the moles of the isocyanate group in the polycarbodiimide compound is more than that of the moles of the hydroxyl group in the polyol, and thereafter allowing the resultant product to react with such as the monoalkoxypolyalkylene glycol.

### [Other components]:

As to the aqueous base paint composition, other components (e.g urethane resins, amino resins, and epoxy resins) may fitly be combined in addition to the aforementioned essential components (a) to (c) when the occasion demands. The urethane resins may be aqueous urethane dispersions on the market. Examples thereof include Takelac XSW75X35, WS4000, and WS5000 produced by Mitsui-Takeda Chemical Co., Ltd., TPA176 produced by Arakawa Chemical Industries, Ltd., VTW6462 produced by SOLUTIA Co., Ltd., NeoRez R9649, R966, R967, R600, R972, R9603, and R986 produced by Avecia Co., Ltd., and Superflex 150 and Superflex 110 produced by Dai-ichi Kogyo Seiyaku Co., Ltd. In addition, when the occasion demands, the composition can further include other additives which are conventionally added to coatings. Examples thereof include pigments, surfactants, neutralizers, stabilizers, defoamers, surface conditioners, leveling agents, ultraviolet absorbents, and antioxidants, inorganic fillers (e.g. silica), conductive fillers (e.g., conductive carbon, conductive ceramics, and metal powders), and organic reformers, and plasticizers.

Examples of the pigments include brilliant pigments and color pigments.

The shape of the brilliant pigments is not especially limited, and the brilliant pigments may be colored. However, the brilliant pigments favorably have, for example, an average particle diameter (D50) of 2 to 50 µm, and a thickness of 0.1 to 5 µm. In addition, the brilliant pigments having an average particle diameter of 10 to 35 µm are excellent in brilliant touch and are more favorably used. Examples thereof include uncolored or colored metallic brilliant materials (e.g. metals, such as aluminum, copper, zinc, iron, nickel, tin, and aluminum oxide, or their alloys), and mixtures thereof. In addition to these, the examples also include interfering mica pigments, white mica pigments, and graphite pigments.

On the other hand, examples of the color pigments include: organic pigments, such as azo chelate pigments, insoluble azo pigments, condensed azo pigments, diketopyrropyrrole pigments, benzoimidazolone pigments, phthalocyanine pigments, indigo pigments, perylone pigments, perylene pigments, dioxane pigments, quinacridone pigments, isoindolidone pigments, and metal-complex pigments; and inorganic pigments, such as chrome yellow, yellow iron oxide, red iron oxide, carbon black, and titanium dioxide.

The neutralizers are used for adjusting pH of the aqueous base paint composition. Examples thereof include alkylamines, such as monoethylamine, diethylamine, triethylamine, tripropylamine, and tributylamine; alkanolamines, such as monoethanolamine, diethanolamine, dimethylethanolamine, and methylpropanolamine; and ammonia water.

Furthermore, the aqueous base paint composition can also include an organic solvent if the ratio of the organic solvent to water as a solvent is not more than 40 weight %. If the aqueous base paint composition includes the organic solvent, the workability and the dispersibility of such as the pigments tend to be enhanced.

Particularly, the surface conditioners, the leveling agents, and the solvents are fitly combined in order to improve the wettability to its undercoat, the flatness, and the crawling of the coating film.

### [Production of aqueous base paint composition]:

The aqueous base paint composition includes the emulsion resin (a), the water-soluble (meth)acrylic resin (b), and the polyether-modified carbodiimide (c), as explained above in detail, and further includes other components when the occasion demands. The respective combining ratios of the components are set in the following range in view of the resulting balance between the coating-film properties and the storage stability.

The nonvolatile content of the emulsion resin (a) is in the range of 55 to 75 weight %, favorably 60 to 70 weight %, relative to the total nonvolatile content of the (a) to (c). In the case where the nonvolatile content of the emulsion resin (a) is less than 55 weight %, the coating workability is deteriorated. On the other hand, in the case where the nonvolatile content of the emulsion resin (a) is more than 75 weight %, the coating-film properties such as the humidity-resisting adhesion are deteriorated.

The nonvolatile content of the water-soluble (meth)acrylic resin (b) is in the range of 0.5 to 15 weight %, favorably 1.5 to 10 weight %, relative to the total nonvolatile content of the (a) to (c). In the case where the nonvolatile content of the water-soluble (meth)acrylic resin (b) is less than 0.5 weight %, the pigment dispersibility is deteriorated. On the other hand, in the case where the nonvolatile content of the water-soluble (meth)acrylic resin (b) is more than 15 weight %, the storage stability is deteriorated thereby causing gelation.

The nonvolatile content of the polyether-modified carbodiimide (c) is in the range of 15 to 44.5 weight %, favorably 20 to 35 weight %, relative to the total nonvolatile content of the (a) to (c). In the case where the nonvolatile content of the polyether-modified carbodiimide (c) is less than 15 weight %, the coating-film properties such as the humidity-resisting adhesion are deteriorated. On the other hand, in the case where the nonvolatile content of the polyether-modified carbodiimide (c) is more than 44.5 weight %, the storage stability is deteriorated thereby causing gelation.

The pH of the aqueous base paint composition is favorably adjusted to the range of 6.5 to 9.5 (more favorably 7.5 to 8.5) with the aforementioned neutralizers. In the case where the pH of the aqueous base paint composition is less than 6.5, the workability tends to be deteriorated. On the other hand, in the case where the pH of the aqueous base paint composition is more than 9.5, there is a tendency such that: the humidity-resisting adhesion is deteriorated, and the corrosion occurs in the case of using aluminum as a brilliant pigment.

The aqueous base paint composition is produced by mixing the (a) to (c) as explained above, and other components as used when the occasion demands.

For example, resin components (e.g. urethane resins, amino resins, and epoxy resins) usable together as other components may be combined in a ratio of 0 to 40 weight % relative to the total nonvolatile content of the (a) to (c). In the case where the ratio is more than 40 weight %, there is a tendency such that: the appearance and the tinting strength of the coating film as obtained are deteriorated.

The ratio of the pigment is favorably in the range of 3 to 120 weight %, more favorably 5 to 100 weight %, relative to the total nonvolatile content of the (a) to (c). In the case where the ratio of the pigment is less than 3 weight %, the hiding ability and the tinting strength are deteriorated. On the other hand, in the case where the ratio of the pigment is more than 120 weight %, the coating-film properties tend to be deteriorated.

### - Aqueous primer coating composition -

The aqueous primer coating composition as used in the present invention is an aqueous primer coating composition including the acid-anhydride-modified chlorinated polyolefin emulsion resin (A), the aqueous urethane dispersion (B), the aqueous epoxy resin (C), and the organic strong base and/or its salt (D), wherein: the nonvolatile content of the (A) is in the range of 20 to 60 weight %, that of the (B) is in the range of 10 to 40 weight %, that of the (C) is in the range of 20 to 60 weight %, and the (D) is in the range of 1 to 5 weight % relative to the total nonvolatile content of the (A), (B), and (C). Hereinafter, this aqueous primer coating composition is explained in detail.

### [Acid-anhydride-modified chlorinated polyolefin]:

The acid-anhydride-modified chlorinated polyolefin in the emulsion resin (A) is a polyolefin derivative including a chlorinated polyolefin moiety and an acid anhydride moiety as bonded to this chlorinated polyolefin moiety.

The chlorinated polyolefin moiety is a moiety including a polyolefin having a substituent chlorine atom. In addition, the acid anhydride moiety, for example, includes a group as derived from an acid anhydride, such as maleic anhydride, citraconic anhydride, and itaconic anhydride, and is a modified moiety as obtained by grafting. The acid anhydride moiety may be a moiety including a group as derived from at least one acid anhydride.

The acid-anhydride-modified chlorinated polyolefin is a polyolefin as internally modified by carrying out a reaction of a polyolefin with an acid anhydride and chlorine, and it is, for example, produced by allowing the chlorine and the acid anhydride to react with the polyolefin. Hereupon, either of the chlorine and the acid anhydride may be allowed to react with the polyolefin earlier than the other. The reaction with the chlorine is, for example, carried out by introducing a chlorine gas into a solution including the polyolefin. In addition, the reaction with the acid anhydride is, for example, carried out by allowing the polyolefin (or chlorinated polyolefin) to react with the acid anhydride in the presence of a peroxide.

Examples of the aforementioned polyolefin include: polyethylene; polypropylene; polybutene; copolymers, such as ethylene-propylene copolymers, ethylene-propylene-diene copolymers, and styrene-butadiene-isoprene copolymers; and polymers as obtained by polymerizing at least one monomer selected from the group consisting of ethylene, propylene, and alkenes containing not more than 8 carbon atoms. These may be used either alone respectively or in combinations with each other. Of the above, the use of the polypropylene is favorable from the viewpoint such that: it is easily available and enhances the adhesion. In addition, examples of the acid anhydride as used for the aforementioned modification include maleic anhydride, citraconic anhydride, and itaconic anhydride.

The acid-anhydride-modified chlorinated polyolefin favorably has a chlorine content of 10 to 30 weight %, more favorably 18 to 22 weight %. In the case where the chlorine content is less than 10 weight %, there is a tendency such that: the solvent solubility is lowered, and the emulsification is difficult to carry out. On the other hand, in the case where the chlorine content is more than 30 weight %, there is a tendency such that: the adhesion to plastic materials such as the polypropylene is deteriorated, and the gasohol resistance is also deteriorated.

The acid-anhydride-modified chlorinated polyolefin favorably has an acid anhydride content of 1 to 10 weight %, more favorably 3 to 7 weight %. In the case where the acid anhydride content is less than 1 weight %, there is a tendency such that: the emulsifying ability is deteriorated, and the gasohol resistance is also deteriorated. On the other hand, in the case where the acid anhydride content is more than 10 weight %, there is a tendency such that: the amount of the acid anhydride group is too large, and the humidity-resisting adhesion is deteriorated.

The acid-anhydride-modified chlorinated polyolefin favorably has a weight-average molecular weight of 20,000 to 200,000, more favorably 30,000 to 120,000. In the case where the weight-average molecular weight is smaller than 20,000, there is a tendency such that: the strength of the primer coating film as obtained from this aqueous primer coating composition is lowered, and the adhesion is also deteriorated. On the other hand, in the case where the weight-average molecular weight is larger than 200,000, there is a tendency such that: the viscosity becomes high, and the emulsification is difficult to carry out.

### [Emulsion resin (A)]:

The acid-anhydride-modified chlorinated polyolefin has so high hydrophobicity as to be difficult to stably disperse into water. Thus, the acid-anhydride-modified chlorinated polyolefin is emulsified with an emulsifier and a neutralizer and the resultant emulsion is used as the emulsion resin (A).

The combining ratio of the emulsifier is fitly set in accordance with the combining ratio of the acid-anhydride-modified chlorinated polyolefin, the neutralizer, or water, but it is, for example, favorably in the range of 5 to 50 weight %, more favorably 10 to 30 weight %, per 100 weight % of the acid-anhydride-modified chlorinated polyolefin. In the case where the ratio of the emulsifier is less than 5 weight %, there is a tendency such that: the storage stability of the emulsion is deteriorated, and further the aggregation or precipitation easily occurs on the way of polymerization in the below-mentioned production process for the emulsion. On the other hand, in the case where the ratio of the emulsifier is more than 50 weight %, there is a tendency such that: a large amount of emulsifier remains in the coating film, and the humidity-resisting adhesion and the weather resistance of the coating film are deteriorated.

There is no especial limitation on the emulsifier, but examples thereof include: nonionic emulsifiers, such as polyoxyethylene alkyl ethers (e.g. polyoxyethylene lauryl ether and polyoxyethylene stearyl ether), polyoxyethylene alkyl phenol ethers (e.g. polyoxyethylene nonyl phenol ether), polyoxyethylene aliphatic esters, polyoxyethylene polyhydric alcohol fatty acid esters, polyhydric alcohol fatty acid esters, polyoxyethylene propylene polyols, and alkylolamides; anionic emulsifiers, such as alkyl sulfate ester salts, dialkylsulfosuccinate salts, alkylsulfonate salts, polyoxyethylene stearyl ether sulfate salts, polyoxyethylene nonyl phenyl ether sulfate salts, and alkyl phosphate salts; amphoteric emulsifiers, such as alky betaines (e.g. stearyl betaine and lauryl betaine) and alkylimidazolines; resin type emulsifiers, such as polyoxyethylene-group-containing urethane resins and carboxylate-salt-group-containing urethane resins; and cationic emulsifiers, such as imidazoline laurate, lauryltrimethylammonium chloride, stearyl betaine, and distearyldimethylammonium chloride. These may be used either alone respectively or in combinations with each other. Among these, the nonionic emulsifiers are favorable, because they have no ionic polar group of high hydrophilicity and therefore make the humidity-resisting adhesion of the coating film good.

The combining ratio of the neutralizer is also set in accordance with the combining ratio of the acid-anhydride-modified chlorinated polyolefin, the emulsifier, or water. Particularly, the neutralizer is combined in consideration of sufficiently neutralizing an acidic functional group (e.g. acid anhydride group and carboxyl group) as contained in such as the acid-anhydride-modified chlorinated polyolefin and the emulsifier, but the combining ratio is, for example, favorably in the range of 0.2 to 10 equivalents, more favorably 0.5 to 4 equivalents, relative to 1 equivalent of the acidic functional group as contained in the acid-anhydride-modified chlorinated polyolefin. In the case where the combining ratio is less than 0.2 equivalent, the emulsification tends to be insufficient. In the case where the combining ratio is more than 10 equivalents, there is a tendency such that: such as the residual neutralizer deteriorates the humidity-resisting adhesion, or promotes the dechlorination.

The pH of the emulsion, which is determined by combining the neutralizer, is favorably in the range of 7 to 11, more favorably 7.5 to 10.5, most favorably 8 to 10. In the case where the pH of the emulsion is less than 7, the neutralization is not sufficient, and therefore there is a tendency such that the storage stability of the emulsion is deteriorated. On the other hand, in the case where the pH of the emulsion is more than 11, an excess of free neutralizer exists in the emulsion, and therefore there is a tendency such that: the emulsion has so a strong smell of the neutralizer as to be difficult to use.

The neutralizer adds to the acid anhydride group and/or carboxyl group of the chlorinated polyolefin resin and/or neutralizes these groups, thereby serving to enhance the hydrophilicity of the modified chlorinated polyolefin to thus improve the storage stability of the emulsion.

The neutralizer includes the below-mentioned organic strong base as an essential component, and may further include conventional organic amines and ammonia when the occasion demands.

Examples of the conventional organic amines include: monoamines, such as trimethylamine, triethylamine, butylamine, dibutylamine and N-methylmorpholine; polyamines, such as ethylenediamine, hexamethylenediamine, piperazine, isophoronediamine, triethylenediamine and diethylenetriamine; and alkanolamines, such as monoethanolamine, diethanolamine, triethanolamine, N-methyldiethanolamine, N,N-dimethylethanolamine and 2-amino-2-methylpropanol.

The combining ratio of the water is favorably in the range of 50 to 95 weight %, more favorably 60 to 85 weight %, most favorably 65 to 80 weight %, of the entirety of the emulsion. In the case where the combining ratio of the water is less than 50 weight %, the nonvolatile content in the emulsion is too much, and therefore there is a tendency such that: the storage stability of the emulsion is deteriorated due to easy occurrence of such as aggregation. On the other hand, in the case where the combining ratio of the water is more than 95 weight %, the production efficiency is lowered in the below-mentioned production process for the emulsion, and further, when the emulsion is used for the aqueous primer coating composition, there is a tendency such that: its nonvolatile content is decreased, and the coating workability is deteriorated.

Though not especially limited, the average particle diameter of polymer particles, including the acid-anhydride-modified chlorinated polyolefin in a major proportion, in the emulsion is favorably in the range of 0.01 to 10 µm, more favorably 0.03 to 5 µm, most favorably 0.05 to 1 µm. In the case where the average particle diameter of the polymer particles is smaller than 0.01 µm, a large quantity of emulsifier is necessary, and therefore there is a tendency such that the water resistance and the weather resistance of the coating film are deteriorated. On the other hand, in the case where the average particle diameter of the polymer particles is larger than 10 µm, the storage stability of the emulsion is deteriorated, and further the volume of the polymer particles is too large, and therefore much melting heat and time to form a coating film is necessary. Furthermore, there is a tendency such that: such as the appearance, the humidity-resisting adhesion, and solvent resistance of the coating film as obtained are sometimes deteriorated.

The emulsification method for the acid-anhydride-modified chlorinated polyolefin may be a publicly known method. Examples thereof include: a method that involves heating the acid-anhydride-modified chlorinated polyolefin, the emulsifier, and the neutralizer (with a solvent used if necessary) or dissolving them as they are, and then emulsifying the resultant mixture in water with a commercially available emulsifying machine; or a method that involves heating the acid-anhydride-modified chlorinated polyolefin and the emulsifier (with a solvent used if necessary) or dissolving them as they are, and then emulsifying the resultant mixture in water (containing the neutralizer as an additive) with a commercially available emulsifying machine. In addition, or otherwise, the emulsification method may be: a method that involves slowly adding water to an organic phase under stirred conditions, thereby carrying out reversed-phase emulsification, wherein the organic phase is obtained by heating the acid-anhydride-modified chlorinated polyolefin, the emulsifier, and the neutralizer (with a solvent used if necessary) or dissolving them as they are; or a method that involves slowly adding water (containing the neutralizer as an additive) to an organic phase under stirred conditions, thereby carrying out reversed-phase emulsification, wherein the organic phase is obtained by heating the acid-anhydride-modified chlorinated polyolefin and the emulsifier (with a solvent used if necessary) or dissolving them as they are.

Examples of the above solvent as used in the above emulsification methods include: aromatic solvents, such as xylene, toluene, and Solveso-100 (produced by Exxon Corporation); and ethylene glycol or propylene glycol solvents, such as diethylene glycol monoethyl ether acetate, butyl cellosolve, propylene glycol monomethyl ether, dipropylene glycol monomethyl ether, and propylene glycol n-propyl ether

### [Aqueous urethane dispersion (B)]:

The aqueous urethane dispersion (B) is a component for enhancing the humidity-resisting adhesion of the coating film, and it is, for example, a dispersion as obtained by forcibly emulsifying or self-emulsifying a prepolymer while dispersing it into water in the presence of an emulsifier, wherein the prepolymer is obtained by beforehand making a reaction between a diol and a diisocyanate.

The aqueous urethane dispersion (B) may include such as dimethylolbutanoic acid having a carboxyl group in order to enhance the dispersibility. In this case, as to a neutralizer as used for producing the aqueous urethane dispersion (B), there can be used the below-mentioned organic strong base and/or a conventional organic amine or ammonia.

Examples of the aqueous urethane dispersion (B) on the market as used in the present invention include: Takelac XSW75X35 produced by Mitsui-Takeda Chemical Co., Ltd., TPA176 produced by Arakawa Chemical Industries, Ltd., VTW6462 produced by SOLUTIA Co., Ltd., NeoRez R9649 and R966 produced by Avecia Co., Ltd., and Superflex 150 and Superflex 110 produced by Dai-ichi Kogyo Seiyaku Co., Ltd.

### [Aqueous epoxy resin (C)]:

Usable as the aqueous epoxy resin (C) is an aqueous resin having at least one epoxy group in its molecule, which resin is well known in corresponding technical field and publicly known itself. Examples thereof include: Deconal EM150 produced by Nagase Chemtex Co., Ltd., EPI-REZ 6006W70 and 5003W55 produced by Japan Epoxy Resin Co., Ltd., and WEX-5100 produced by Toto Kasei Co., Ltd., which are obtained by forcibly emulsifying a novolac type epoxy resin with an emulsifier, wherein the novolac type epoxy resin is obtained by carrying out an addition reaction of epichlorohydrin to a phenol novolac resin; and Deconal EM101 and EM103 produced by Nagase Chemtex Co., Ltd., and EPI-REZ 3510W60, 3515W6, 3522W60, and 3540WY55 produced by Japan Epoxy Resin Co., Ltd., which are obtained by forcibly emulsifying a bisphenol type epoxy resin with an emulsifier, wherein the bisphenol epoxy type resin is obtained by similarly carrying out an addition reaction of epichlorohydrin to bisphenol; and further Deconal EX-611, EX-614, EX-411, and EX-313 produced by Nagase Chemtex Co., Ltd., as alkyl-type epoxy resins as obtained by carrying out an addition reaction of epichlorohydrin to a polyol (e.g. sorbitol, pentaerythritol, and glycerin).

### [Organic strong base and/or its salt (D)]:

The organic strong base and/or its salt (D) is a component for enhancing the gasohol resistance. In addition, the (D) can form the coating film excellent in the coating-film properties such as the humidity-resisting adhesion and the gasohol resistance, even if the baking treatment of the three-layered coating film as obtained by overcoating the aqueous primer coating composition, the above base paint composition, and the two-component clear paint is carried out at the same time. Accordingly, there can be omitted the baking treatment of the primer coating film which has hitherto been carried out before overcoating the base paint and the two-component clear paint, and therefore the productivity is enhanced by leaps and bounds in the coating steps.

The aqueous coating composition may include either of the organic strong base and its salt. When the organic strong base is, as it is, added to be used as the below-mentioned pH-adjusting agent, the pH of the aqueous primer coating composition rises. On the other hand, in the case of not desiring the rise of the pH, it is proper to add the salt of the organic strong base instead of the organic strong base. Even if the salt of the organic strong base is added, the baking treatment of the above three-layered coating film can be carried out at the same time, and there can be obtained the coating film excellent in the coating-film properties such as the humidity-resisting adhesion and the gasohol resistance.

The organic strong base favorably has a pKa of not less than 11. Examples of the organic strong base include: amines, such as 1,8-diazabicyclo[5.4.0]undecene-7 (DBU), 1,5-diazabicyclo[4.3.0]nonene-5 (DBN), piperazine, piperidine, and tetramethylguanidine; and tetraalkylammonium hydroxides, such as tetramethylammonium hydroxide, tetraethylammonium hydroxide, and tetrapropylammonium hydroxide. Among these organic strong bases, the DBU or the DBN is favorable, and can form the coating film excellent in the gasohol resistance.

The salt of the organic strong base is generally obtained by neutralizing the above organic strong base with an organic acid or an inorganic acid. Examples of the salt of the organic strong base include: a phenolate salt, an octanoate salt, and a hydrochloride of the DBU; and tetraethylammonium acetate and tetrapropylammonium chloride.

Incidentally, the organic strong base can be used as the above-explained neutralizer of the emulsion resin and as the below-mentioned pH-adjusting agent of the aqueous primer coating composition. In addition, if the organic strong base is beforehand used as the neutralizer of the emulsion resin, there is an advantage of enhancing the gasohol resistance.

### [Other components]:

As to the aqueous primer coating composition, other aqueous resins can fitly be combined in addition to the above essential components (A), (B), (C), and (D) each, if necessary. Examples of the above other aqueous resins include aqueous acrylic resins, acrylic emulsions, and amino resin emulsions. Incidentally, there is a case where these aqueous resins are used as the below-mentioned pigment dispersants.

When the occasion demands, the aqueous primer coating composition can further include other additives which are conventionally added to coatings. Examples thereof include pigments, surfactants, neutralizers, stabilizers, thickeners, defoamers, surface conditioners, leveling agents, pigment dispersants, ultraviolet absorbents, antioxidants, inorganic fillers (e.g. silica), conductive fillers (e.g., conductive carbon, conductive ceramics, and metal powders), organic reformers, and plasticizers.

Examples of the thickeners mixable into the aqueous primer coating composition include associated nonionic urethane thickeners, alkaline-swollen thickeners, and bentonite as an inorganic intercalation compound.

Examples of the pigments mixable into the present invention aqueous primer coating composition include: color pigments, such as inorganic pigments (e.g. titanium oxide, carbon black, iron oxide, chromium oxide, and Prussian blue) and organic pigments (e.g. azo pigments, anthracene pigments, perylene pigments, quinacridone pigments, indigo pigments, and phthalocyanine pigments); extenders, such as talc and precipitated barium sulfate; conductive pigments, such as conductive carbon and whiskers (as obtained by coating tin oxide as doped with antimony); and uncolored or colored metallic brilliant materials (e.g. metals, such as aluminum, copper, zinc, iron, nickel, tin, and aluminum oxide, or their alloys). These may be used either alone respectively or in combinations with each other.

Examples of the pigment dispersants mixable into the aqueous primer coating composition include: the aqueous acrylic resins; acidic block copolymers, such as BYK-190 produced by Byk Chemie Co., Ltd.; styrene-maleic acid copolymers; acetylenediol derivatives, such as Surfynol GA and Surfynol T324 produced by Air Products Co., Ltd.; water-soluble carboxymethyl cellulose acetate butyrate, such as CMCAB-641-0.5 produced by Eastman Chemical Co., Ltd. Stable pigment pastes can be prepared by using these pigment dispersants.

Examples of the defoamers mixable into the aqueous primer coating composition include Surfynol 104PA and Surfynol 404 produced by Air Products Co., Ltd..

The aqueous primer coating composition can further include an organic solvent if the ratio thereof is not more than 40 weight % of water as the solvent. The inclusion of the organic solvent tends to improve the workability and to enhance the dispersibility of such as pigments.

### [Production of aqueous primer coating composition]:

The aqueous primer coating composition includes the acid-anhydride-modified chlorinated polyolefin emulsion resin (A), the aqueous urethane dispersion (B), the aqueous epoxy resin (C), and the organic strong base and/or its salt (D), as explained above in detail, and further includes other components such as the pigments when the occasion demands. The respective combining ratios of the components are set in the following range in view of the resulting balance between the coating-film properties and the storage stability.

The nonvolatile content of the acid-anhydride-modified chlorinated polyolefin emulsion resin (A) is favorably in the range of 20 to 60 weight %, more favorably 30 to 50 weight %, relative to the total nonvolatile content of the acid-anhydride-modified chlorinated polyolefin emulsion resin (A), the aqueous urethane dispersion (B), and the aqueous epoxy resin (C). In the case where the nonvolatile content of the acid-anhydride-modified chlorinated polyolefin emulsion resin (A) is less than 20 weight %, the adhesion to the substrate tends to be deteriorated. On the other hand, in the case where the nonvolatile content of the acid-anhydride-modified chlorinated polyolefin emulsion resin (A) is more than 60 weight %, the adhesion between coating films tends to be deteriorated.

The nonvolatile content of the aqueous urethane dispersion (B) is favorably in the range of 10 to 40 weight %, more favorably 15 to 25 weight %, relative to the total nonvolatile content of the acid-anhydride-modified chlorinated polyolefin emulsion resin (A), the aqueous urethane dispersion (B), and the aqueous epoxy resin (C). In the case where the nonvolatile content of the aqueous urethane dispersion (B) is less than 10 weight %, there is a tendency such that: the film formability is not sufficient, and the humidity-resisting adhesion is deteriorated. On the other hand, in the case where the nonvolatile content of the aqueous urethane dispersion (B) is more than 40 weight %, the gasohol resistance tends to be deteriorated.

The nonvolatile content of the aqueous epoxy resin (C) is favorably in the range of 20 to 60 weight %, more favorably 30 to 50 weight %, relative to the total nonvolatile content of the acid-anhydride-modified chlorinated polyolefin emulsion resin (A), the aqueous urethane dispersion (B), and the aqueous epoxy resin (C). In the case where the nonvolatile content of the aqueous epoxy resin (C) is less than 20 weight %, the water resistance tends to be deteriorated. On the other hand, in the case where the nonvolatile content of the aqueous epoxy resin (C) is more than 60 weight %, the storage stability tends to be deteriorated.

The ratio of the organic strong base and/or its salt (D) is favorably in the range of 1 to 5 weight %, more favorably 1.5 to 3 weight %, relative to the total nonvolatile content of the acid-anhydride-modified chlorinated polyolefin emulsion resin (A), the aqueous urethane dispersion (B), and the aqueous epoxy resin (C). In the case where the ratio of the organic strong base and/or its salt (D) is less than 1 weight %, the gasohol resistance is deteriorated. On the other hand, in the case where the ratio of the organic strong base and/or its salt (D) is more than 5 weight %, the humidity-resisting adhesion is deteriorated.

The ratio of the pigment is favorably in the range of 3 to 120 weight % relative to the total nonvolatile content of the acid-anhydride-modified chlorinated polyolefin emulsion resin (A), the aqueous urethane dispersion (B), and the aqueous epoxy resin (C). In the case where the ratio of the pigment is less than 3 weight %, there tends to be no hiding ability. On the other hand, in the case where the ratio of the pigment is more than 120 weight %, there tends to be no film formability.

The ratio of the pigment dispersant is favorably in the range of 3 to 20 weight % relative to the total nonvolatile content of the acid-anhydride-modified chlorinated polyolefin emulsion resin (A), the aqueous urethane dispersion (B), and the aqueous epoxy resin (C). In the case where the ratio of the pigment dispersant is less than 3 weight %, there is a tendency such that stable pigment pastes cannot be obtained. On the other hand, in the case where the ratio of the pigment dispersant is more than 20 weight %, the gasohol resistance and the humidity-resisting adhesion tend to be deteriorated.

The pH of the aqueous primer coating composition is favorably in the range of 6.5 to 9.5, more favorably 7.5 to 8.5. In the case where the pH of the aqueous primer coating composition is less than 6.5, the dispersion stability tends to be deteriorated. On the other hand, in the case where the pH of the aqueous primer coating composition is more than 9.5, there is a tendency for the composition to have such a high viscosity as to be difficult to use.

Incidentally, the pH of the aqueous primer coating composition is fitly adjusted by using such as the aforementioned organic strong base.

The aqueous primer coating composition is produced by mixing the (A) to (D) as explained above (and other components as used when the occasion demands). Particularly, in the case of producing the aqueous primer coating composition that contains the pigment, a production process for the aqueous primer coating composition, which involves beforehand preparing a pigment-dispersed paste including the pigment and the pigment dispersant as essential components, is favorable because of its high production efficiency.

### - Process for formation of coating film on plastic material -

The present invention process for formation of a coating film on a plastic material is a process that comprises the steps of: coating the plastic material with the above aqueous primer coating composition; and thereafter drying the resultant primer coating film in such a manner that its nonvolatile content will not be less than 70 weight %; and thereafter overcoating the primer coating film with the above aqueous base paint composition; and thereafter drying the resultant base coating film in such a manner that its nonvolatile content will not be less than 60 weight %; and thereafter overcoating the base coating film with a two-component clear paint; and thereafter baking the resultant three-layered coating film onto the plastic material. The present invention coated article is obtained by this process.

Though not especially limited, examples of the plastic material as used in the present invention process for formation of a coating film include: polyolefins (e.g. polypropylene (PP) and polyethylene (PE)), and further acrylonitrile-styrene (AS), acrylonitrile-butadiene-styrene (ABS), polyphenylene oxide (PPO), polyvinyl chloride (PVC), polyurethane (PU), and polycarbonate (PC).

### [Formation of primer coating film]:

In the present invention process for formation of a coating film, the above aqueous primer coating composition is first coated onto the plastic material to form the primer coating film.

There is no especial limitation on the method for coating the aqueous primer coating composition, but the coating can be carried out either by air spray coating or by airless spray coating. However, in the case of electrostatically coating the aqueous base paint composition as used in the present invention and the clear paint in a subsequent step, the conduction of the plastic material is necessary, and is carried out by beforehand mixing conductive carbon into the aqueous primer coating composition and then coating the aqueous primer coating composition. Examples of the conductive carbon include Ketchen black EC600JD produced by Lion Corporation, and Printex EX-25 produced by Degussa Corporation. Incidentally, the combining ratio of the conductive carbon is favorably in the range of 3 to 10 weight % relative to the aqueous primer coating composition in terms of solid resin content.

After the step of coating the aqueous primer coating composition onto the plastic material, the step of drying the resultant primer coating film is carried out. This drying step may be carried out either by air drying or by forced drying. As to the forced drying, the drying step may be carried out by any of such as warm-wind drying, near-infrared-ray drying, and electromagnetic-wave drying. In the drying step, the nonvolatile content of the resultant primer coating film is adjusted so as not to be less than 70 weight %.

The drying temperature of the aqueous primer coating composition is selected in such a range as does not cause the heat deflection of the plastic material that is used as a substrate, and is favorably not higher than 120 °C, more favorably not higher than 90 °C. Incidentally, the drying time usually depends upon the drying temperature and is fitly set in consideration of energy efficiency.

The dried-film thickness of the aqueous primer coating composition is favorably in the range of 2 to 30 µm, more favorably 5 to 20 µm. In the case where the dried-film thickness is less than 2 µm, there is a tendency such that the thickness is too thin to obtain a continuous uniform film. On the other hand, in the case where the dried-film thickness is more than 30 µm, the water resistance and the weather resistance tend to be deteriorated.

### [Formation of base coating film, coating of clear paint, and baking of coating film]:

Next, in the present invention process for formation of a coating film on a plastic material, the primer coating film is formed and thereafter overcoated with the above aqueous base paint composition, and then the base coating film is formed by drying in such a manner the nonvolatile content of the base coating film will not be less than 60 weight %.

There is no especial limitation on the method for coating the aqueous base paint composition, but the coating can be carried out by the same method as of the aqueous primer coating composition. In addition, in the case of coating an aqueous primer including a conductive pigment, there are advantages in that the coating efficiency also rises if the aqueous base paint composition is electrostatically coated.

After the step of coating the aqueous base paint composition, the step of drying the resultant base coating film is carried out. This drying step may be carried out either by air drying or by forced drying. As to the forced drying, the drying step may be carried out by any of such as warm-wind drying, near-infrared-ray drying, and electromagnetic-wave drying. However, the warm-wind drying is favorable because of its easiness and high workability. In the drying step, the nonvolatile content of the resultant base coating film is adjusted so as not to be less than 60 weight %.

The drying temperature of the aqueous base paint composition is selected in such a range as does not cause the heat deflection of the plastic material that is used as a substrate, and is favorably not higher than 120 °C, more favorably not higher than 90 °C. Incidentally, the drying time usually depends upon the drying temperature and is fitly set in consideration of energy efficiency.

The dried-film thickness of the aqueous base paint composition is favorably in the range of 8 to 40 µm, more favorably 10 to 35 µm. In the case where the dried-film thickness is less than 8 µm, there is a tendency such that the thickness is too thin to obtain uniform tinting strength. On the other hand, in the case where the dried-film thickness is more than 40 µm, the water resistance and the weather resistance tend to be deteriorated.

In the present invention process for formation of a coating film on a plastic material, the clear paint is overcoated onto the aforementioned base coating film, and thereafter the resultant three-layered coating film is baked onto the plastic material.

There is no especial limitation on the method for coating the clear paint, but the coating can be carried out in the same way as of the aqueous primer coating composition. In the case of using the aqueous conductive primer in the same way as of the aqueous base paint composition, there are advantages in that the coating efficiency also rises if the clear paint is electrostatically coated.

In the present invention process, it is necessary to use, as the clear paint, a two-component clear paint including a curing agent that is an isocyanate (e.g. a two-component-curing type urethane paint). The reason is because: the coating film as obtained has good appearance, and is excellent in the acid resistance.

Examples of the isocyanate used as the curing agent include: non-yellowing-type compounds having at least two isocyanate groups per molecule (e.g. adducts, isocyanurates, and biurets of such as hexamethylene diisocyanate and isophorone diisocyanate). Examples of the curing agent on the market include: Desmodur 3600 and Sumidur 3300 produced by Sumitomo Bayer Co., Ltd.; Colonate HX produced by Nippon Polyurethane Co., Ltd.; Takenate D-140NL and D-170N produced by Mitsui Takeda Chemical Co., Ltd.; and Duranate 24A-90PX and THA-100 produced by Asahi Kasei Corporation.

Examples of the clear paint on the market include two-component-curing type urethane paints, such as R788-1 produced by Morton Nippon Coatings Co., Ltd., R288 and R291 produced by Nippon Bee Chemical Co., Ltd., and R788SHS produced by Nippon Paint Automotive Europe Co., Ltd. Though there is no especial limitation on the method for baking the above-obtained three-layered coating film onto the aforementioned plastic material, yet the baking temperature is favorably in the range of 80 to 120 °C, more favorably 80 to 100 °C. In the case where the baking temperature is lower than 80 °C, there is a possibility that the baking may be imperfect, therefore, in the case where a coating film having tackiness has been formed, there is a tendency such that the treatment of the subsequent step cannot be carried out soon. On the other hand, in the case where the baking temperature is higher than 120 °C, the substrate tends to be deformed.

In addition, the baking time usually depends upon the baking temperature and is fitly set in consideration of energy efficiency, but it is favorably in the range of 15 to 60 minutes, more favorably 20 to 30 minutes. In the case where the baking time is less than 15 minutes, the baking tends to be imperfect, though depending upon the baking temperature. On the other hand, the baking time is more than 60 minutes, the working efficiency tends to lower.

The present invention coated article is obtained with good productivity by the above process for formation of a coating film, and has a coating film that is excellent in the appearance (e.g. tinting strength), the adhesion, the humidity-resisting adhesion, and the gasohol resistance.

### (Effects and Advantages of the Invention):

The present invention process for formation of a coating film on a plastic material enables the formation of the coating film with good productivity wherein the coating film is excellent in the adhesion, the humidity-resisting adhesion, and the gasohol resistance, and has good appearance, even if the baking treatment of the three-layered coating film as obtained by overcoating the aqueous primer coating composition, the aqueous base paint composition, and the two-component clear paint is carried out at the same time.

As to the present invention coated article, its coating film is excellent in the humidity-resisting adhesion and the gasohol resistance and has good appearance, because this coated article is obtained by the present invention process for formation of a coating film on a plastic material.

### DETAILED DESCRIPTION OF THE PREFERRED EMBODIMENTS

Hereinafter, the present invention is more specifically illustrated by the following examples of some preferred embodiments in comparison with comparative examples not according to the invention. However, the present invention is not limited to these examples. Incidentally, hereinafter, unless otherwise noted, the unit "part(s)" denotes "part(s) by weight".

In the following examples, production examples of the aqueous primer coating composition and the aqueous primer paint composition are shown at first.

### - Production examples of aqueous primer coating composition-.

### [Production Example 1 of maleic-anhydride-modified chlorinated polypropylene emulsion resin]:

A reaction apparatus, as equipped with a stirring blade, a thermometer, a temperature-controlling rod, and a condenser was charged with 240 parts of Hardren M128P (maleic-anhydride-modified chlorinated polypropylene produced by Toyo Kasei Kogyo Co., Ltd., chlorine content: 21 weight %, and weight-average molecular weight: 40,000), 60 parts of Emulgen 920 (nonylphenyl polyoxyethylene ether produced by Kao Corporation), 64 parts of Solveso-100 (aromatic hydrocarbon produced by Exxon Corporation), and 27 parts of Carbitol acetate (diethylene glycol monoethyl ether acetate), and then the resultant mixture was heated and dissolved at 110 °C for 1 hour. Thereafter, the mixture was cooled to not higher than 100 °C, and then a solution of 9 parts of 1,8-diazabicyclo[5.4.0]undecene-7 (hereinafter, referred to as DBU) in 600 parts of deionized water was added dropwise thereto in 1 hour, thereby carrying out reversed-phase emulsification. After the resultant emulsion mixture was cooled, it was filtrated with a wire net of 400 mesh, thus obtaining a maleic-anhydride-modified chlorinated polypropylene emulsion resin (emulsion resin (1)).

This emulsion resin (1) had a nonvolatile content of 29.5 weight % and an average particle diameter of 0.08 µm (as measured by a laser light scattering method).

### [Production Example 2 of maleic-anhydride-modified chlorinated polypropylene emulsion resin]:

A reaction apparatus, as equipped with a stirring blade, a thermometer, a temperature-controlling rod, and a condenser was charged with 240 parts of Hardren M128P (maleic-anhydride-modified chlorinated polypropylene produced by Toyo Kasei Kogyo Co., Ltd., chlorine content: 21 weight %, and weight-average molecular weight: 40,000), 60 parts of Emulgen 920 (nonylphenyl polyoxyethylene ether produced by Kao Corporation), 64 parts of Solveso-100 (aromatic hydrocarbon produced by Exxon Corporation), and 27 parts of Carbitol acetate (diethylene glycol monoethyl ether acetate), and then the resultant mixture was heated and dissolved at 110 °C for 1 hour. Thereafter, the mixture was cooled to not higher than 100 °C, and then a solution of 9 parts of dimethylethanolamine (hereinafter, referred to as DMEA, and pKa = 9.11 (measured by its maker)) in 600 parts of deionized water was added dropwise thereto in 1 hour, thereby carrying out reversed-phase emulsification. After the resultant emulsion mixture was cooled, it was filtrated with a wire net of 400 mesh, thus obtaining a maleic-anhydride-modified chlorinated polypropylene emulsion resin (emulsion resin (2)).

This emulsion resin (2) had a nonvolatile content of 29.5 weight % and an average particle diameter of 0.1 µm (as measured by a laser light scattering method).

### [Production Example of pigment-dispersed paste]:

To a container as equipped with a stirrer, there were added 340 parts of aqueous acrylic resin (acid value: 50, weight-average molecular weight: 30,000, and nonvolatile content: 30 weight %), 90 parts of Surfynol GA (pigment dispersant produced by Air Products Co., Ltd.), 69 parts of Surfynol 104PA (defoamer produced by Air Products Co., Ltd.), 1,960 parts of deionized water, 130 parts of Carbon black ECP600JD (conductive carbon produced by Lion Corporation), 1,280 parts of Typure R960 (titanium-oxide pigment produced by E.I. du Pont de Nemours and Company), and 130 parts of Nipseal SS50B (silica produced by Nippon Silica Co., Ltd.) in order under stirred conditions, and then the resultant mixture was stirred for 1 hour. Thereafter, the mixture was dispersed with a laboratory DYNO-MILL of 1.4 liters until its grind gauge showed not more than 20 µm, thus obtaining a pigment-dispersed paste (1).

This pigment-dispersed paste (1) had a nonvolatile content of 43 weight % and a viscosity of 60 KU (20 °C).

### <Production Example 1: production of aqueous primer coating composition (1)>:

A container, as equipped with a stirrer, was charged with 312 parts of the pigment-dispersed paste (1) and 240 parts of deionized water. Then, 120 parts of diluted liquid of EPI-REZ 6006W70 (epoxy resin emulsion produced by Japan Epoxy Resin Co., Ltd.) (as obtained by beforehand adding thereto deionized water, thereby adjusting its nonvolatile content to 50 weight %), 100 parts of Superflex-150 (aqueous urethane dispersion produced by Dai-ichi Kogyo Seiyaku Co., Ltd., and nonvolatile content: 30 weight %), 200 parts of the emulsion resin (1), 9 parts of Dynol 604 (additive (leveling agent) produced by Air Products Co., Ltd.), 9 parts of Primal ASE60 (thickener produced by Rohm and Haas Company), and 8 parts of 5 weight % aqueous DBU solution were added thereto in order under stirred conditions, and then the resultant mixture was stirred for 1 hour.

An aqueous primer coating composition (1) as obtained in this way had a nonvolatile content of 30 weight % and a viscosity of 60 KU (20 °C). As to the aqueous primer coating composition (1) as obtained, the nonvolatile content of the emulsion resin (1) was 40 weight %, that of Superflex-150 was 20 weight %, that of EPI-REZ 6006W70 was 40 weight %, and DBU (an organic strong base and/or its salt (D)) was 1.5 weight % relative to the total nonvolatile content of the emulsion resin (1) (an acid-anhydride-modified chlorinated polyolefin emulsion resin (A)), Superflex-150 (an aqueous urethane dispersion (B)), and EPI-REZ 6006W70 (an aqueous epoxy resin (C)).

### <Production Example 2: production of aqueous primer coating composition (2)>:

A container, as equipped with a stirrer, was charged with 312 parts of the pigment-dispersed paste (1) and 240 parts of deionized water. Then, 120 parts of diluted liquid of EPI-REZ 6006W70 (epoxy emulsion produced by Japan Epoxy Resin Co., Ltd.) (as obtained by beforehand adding thereto deionized water, thereby adjusting its nonvolatile content to 50 weight %), 100 parts of Superflex-150 (aqueous urethane dispersion produced by Dai-ichi Kogyo Seiyaku Co., Ltd., and nonvolatile content: 30 weight %), 200 parts of the emulsion resin (2), 9 parts of Dynol 604 (additive (leveling agent) produced by Air Products Co., Ltd.), 9 parts of Primal ASE60 (thickener produced by Rohm and Haas Company), and 3 parts of 26 weight % aqueous ammonia solution were added thereto in order under stirred conditions, and then the resultant mixture was stirred for 1 hour.

An aqueous primer coating composition (2) as obtained in this way had a nonvolatile content of 30 weight % and a viscosity of 60 KU (20 °C).

As the aqueous primer coating composition (2) as obtained, an organic strong base and/or its salt (D) was not mixed.

### <Production Example 3: production of aqueous primer coating composition (3)>:

A container, as equipped with a stirrer, was charged with 312 parts of the pigment-dispersed paste (1) and 160 parts of deionized water. Then, 300 parts of Superflex-150 (aqueous urethane dispersion produced by Dai-ichi Kogyo Seiyaku Co., Ltd., and nonvolatile content: 30 weight %), 200 parts of the emulsion resin (2), 9 parts of Dynol 604 (additive (leveling agent) produced by Air Products Co., Ltd.), 9 parts of Primal ASE60 (thickener produced by Rohm and Haas Company), and 8 parts of 5 weight % aqueous DBU solution were added thereto in order under stirred conditions, and then the resultant mixture was stirred for 1 hour.

An aqueous primer coating composition (3) as obtained in this way had a nonvolatile content of 30 weight % and a viscosity of 60 KU (20 °C).

As the aqueous primer coating composition (3) as obtained, an aqueous epoxy resin (C) was not mixed.

### - Production examples of aqueous base paint composition -

Hereinafter, production examples of each component constituting the aqueous base paint composition are shown.

### [Production Example of emulsion resin (a)]:

A reaction vessel was charged with 136 parts of deionized water, and the water was heated to 80 °C in a nitrogen gas stream under stirred conditions. Subsequently, a monomer emulsion and an initiator solution were dropwise added thereto at the same time over a period of 2 hours, wherein the monomer emulsion included 80 parts of the following α,β-ethylenically unsaturated monomer mixture 1, 0.5 part of Aqualon HS-10, 0.5 part of Adecaliasoap NE-20, and 80 parts of deionized water, and wherein the initiator solution included 0.24 part of ammonium persulfate and 10 parts of deionized water. After the dropwise addition, the resultant mixture was aged for 1 hour at the same temperature.

Furthermore, 20 parts of the following α,β-ethylenically unsaturated monomer mixture 2 (as to the total of α,β-ethylenically unsaturated monomer mixtures 1 and 2, acid value: 20, and hydroxyl-group value: 40), and an initiator solution including 0.06 part of ammonium persulfate and 10 parts of deionized water were dropwise added to the reaction vessel at the same time over a period of 0.5 hour. After the dropwise addition, the resultant mixture was aged for 2 hours at the same temperature.

Subsequently, the resultant mixture was cooled to 40 °C and filtrated with a filter of 400 mesh. Thereafter, 67.1 parts of deionized water and 0.32 part of dimethylaminoethanol were added thereto to adjust its pH to 6.5, thus obtaining an emulsion resin (a) having an average particle diameter of 200 nm and a nonvolatile content of 25 weight %.
(α,β-Ethylenically unsaturated monomer mixture 1):
   Methyl methacrylate: 10.22 parts
   Ethyl acrylate: 58.36 parts
   2-Hydroxyethyl methacrylate: 7.42 parts
   Acrylamide: 4.00 parts
(α,β-Ethylenically unsaturated monomer mixture 2):
   Ethyl acrylate: 15.07 parts
   2-Hydroxyethyl methacrylate: 1.86 parts
   Methacrylic acid: 3.07 parts

### [Production Example of emulsion resin (a₂)]:

An emulsion resin (a₂) having an average particle diameter of 180 nm and a nonvolatile content of 25 weight % was obtained in the same way as of Production Example of emulsion resin (a) except to use the following mixtures (as to the total of α,β-ethylenically unsaturated monomer mixtures 1 and 2, acid value: 26, and hydroxyl-group value: 24) as the α,β-ethylenically unsaturated monomer mixtures 1 and 2.
(α,β-Ethylenically unsaturated monomer mixture 1):
   Methyl methacrylate: 55.0 parts
   Styrene: 10.0 parts
   n-Butyl acrylate: 9.0 parts
   2-Hydroxyethyl acrylate: 5.0 parts
   Methacrylic acid: 1.0 part
(α,β-Ethylenically unsaturated monomer mixture 2):
   Methyl methacrylate: 5.0 parts
   n-Butyl acrylate: 7.0 parts
   2-Ethylhexyl acrylate: 5.0 parts
   Methacrylic acid: 3.0 parts

### [Production Example of polyether-modified carbodiimide (c)]:

An amount of 700 parts of 4,4-dicyclohexylmethane diisocyanate was allowed to react together with 14 parts of carbodiimidation catalyst (3-methyl-1-phenyl-2-phosphorene-1-oxide) at 180 °C for 16 hours, thus obtaining isocyanate-terminated 4,4-dichlorohexylmethane carbodiimide (content of carbodiimide group: 4 equivalent weight). Subsequently, 226.8 parts of the carbodiimide as obtained was dissolved in 224.2 parts of N-methylpyrrolidone under heated conditions of 90 °C. Next, 200 parts of polypropylene glycol (number-average molecular weight: 2,000) was added thereto, and the resultant mixture was stirred at 40 °C for 10 minutes. Thereafter, 0.16 part of dibutyltin dilaurate was added thereto, and the resultant mixture was heated again to 90 °C and allowed to react for 3 hours. Furthermore, 96.4 parts of poly(oxyethylene) mono-2-ethylhexyl ether having 8 oxyethylene units was added thereto and allowed to react at 100 °C for 5 hours, thus obtaining a polyether-modified carbodiimide solution having a resin content (nonvolatile content) of 70 weight % (polyether-modified carbodiimide (c)).

### [Production Example of white pigment paste]:

To a container as equipped with a stirrer, there were added 860 parts of water-soluble (meth)acrylic resin (b) (acid value: 165, molecular weight: 6,200, and nonvolatile content: 20 weight %), 26 parts of Surfynol 440 (defoamer produced by Air Products Co., Ltd.), 430 parts of deionized water, and 2,700 parts of Typec R97 (titanium pigment produced by Ishihara Sangyo Kaisha, Ltd.) in order under stirred conditions, and the resultant mixture was stirred for 1 hour. Then, the mixture was dispersed with a laboratory DYNO-MILL of 1.4 liters until its grind gauge showed not more than 5 µm, thus obtaining a white pigment paste.

This white-pigment-dispersed paste had a nonvolatile content of 72 weight %.

### [Production Example of blue pigment paste]:

To a container as equipped with a stirrer, there were added 2,700 parts of water-soluble (meth)acrylic resin (b) (acid value: 165, molecular weight: 6,200, and nonvolatile content: 20 weight %), 13 parts of Surfynol 440 (defoamer produced by Air Products Co., Ltd.), and 1,260 parts of Shyninblue G314 (organic pigment produced by Sanyo Shikiso Co., Ltd.) in order under stirred conditions, and the resultant mixture was stirred for 1 hour. Then, the mixture was dispersed with a laboratory DYNO-MILL of 1.4 liters until its grind gauge showed not more than 5 µm, thus obtaining a blue pigment paste.

This blue-pigment-dispersed paste had a nonvolatile content of 45 weight %.

As is shown below, aqueous base paint compositions were produced by mixing the components as obtained in the above production examples.

### <Production Example 4: production of aqueous base paint composition (1)>:

An amount of 16 parts of deionized water was dispersed in 276 parts of the emulsion resin (a), and 38 parts of the polyether-modified carbodiimide (c) was added thereto and stirred sufficiently. Next, 40 parts of propylene glycol monobutyl ether, 80 parts of NeoRez R9649 (aliphatic polyester urethane dispersion produced by Avecia Co., Ltd., and nonvolatile content: 35 weight %), and 200 parts of the white pigment paste were added thereto in order under stirred conditions. Furthermore, 3 parts of Primal ASE60 (thickener produced by Rohm and Haas Company) was added thereto and stirred sufficiently. Thereafter, the pH of the resultant mixture was adjusted to 8.5 by using 10 weight % aqueous dimethylethanolamine solution and deionized water, thus obtaining an aqueous base paint composition (1).

This aqueous base paint composition (1) had a nonvolatile content of 27 weight % (under dried conditions of 105 °C and 3 hours) and a viscosity of 60 KU (Stomer viscometer, 20 °C).

As to the aqueous base paint composition (1) as obtained, the nonvolatile content of the emulsion resin (a) was 66 weight %, that of the (b) was 8 weight %, and that of the (c) was 26 weight %, relative to the total nonvolatile content of emulsion resin (a), a water-soluble (meth)acrylic resin (b) and a polyether-modified carbodiimide (c).

### <Production Example 5: production of aqueous base paint composition (2)>:

An amount of 21 parts of deionized water was dispersed in 324 parts of the emulsion resin (a), and 45 parts of the polyether-modified carbodiimide (c) was added thereto and stirred sufficiently. Next, a solution, 1.7 parts of 50 weight % xylene solution of JP-512 (alkyl phosphate produced by Johoku Kagaku Co., Ltd.), 95 parts of NeoRez R9649 (aliphatic polyester urethane dispersion produced by Avecia Co., Ltd., and nonvolatile content: 35 weight %), and 18 parts of the blue pigment paste were added thereto in order under stirred conditions, wherein the solution was obtained by dissolving 14 parts of phosphoric-acid-group-containing acrylic resin (acid value of phosphoric acid: 50, hydroxyl-group value: 60, number-average molecular weight: 6,000, and nonvolatile content: 50 weight %), 50 parts of propylene glycol monobutyl ether, 36 parts of MH8801 aluminum paste (aluminum pigment paste produced by Asahi Kasei Corporation), and 20 parts of Symel 204 (alcohol-modified methylol melamine produced by Mitsui Saitech Co., Ltd.). Furthermore, 3 parts of Primal ASE60 (thickener produced by Rohm and Haas Company) was added thereto and stirred sufficiently. Thereafter, the pH of the resultant mixture was adjusted to 8.5 by using 10 weight % aqueous dimethylethanolamine solution and deionized water, thus obtaining an aqueous base paint composition (2).

This aqueous base paint composition (2) had a nonvolatile content of 20 weight % (under dried conditions of 105 °C and 3 hours) and a viscosity of 60 KU (Stomer viscometer, 20 °C).

As to the aqueous base paint composition (2) as obtained, the nonvolatile content of the emulsion resin (a) was 71 weight %, that of the (b) was 2 weight %, and that of the (c) was 27 weight %, relative to the total nonvolatile content of emulsion resin (a), a water-soluble (meth)acrylic resin (b) and a polyether-modified carbodiimide (c).

### <Production Example 6: production of aqueous base paint composition (3)>:

An aqueous base paint composition (3) was obtained in the same way as of Production Example 5 except that the 45 parts of the polyether-modified carbodiimide (c) was not added.

This aqueous base paint composition (3) had a nonvolatile content of 20 weight % (under dried conditions of 105 °C and 3 hours) and a viscosity of 60 KU (Stomer viscometer, 20 °C).

### <Production Example 7: production of aqueous base paint composition (4)>:

An aqueous base paint composition (4) was obtained in the same way as of Production Example 5 except that the emulsion resin (a₂) was used instead of the emulsion resin (a).

This aqueous base paint composition (4) had a nonvolatile content of 20 weight % (under dried conditions of 105 °C and 3 hours) and a viscosity of 60 KU (Stomer viscometer, 20 °C).

As to the aqueous base paint composition (4) as obtained, the nonvolatile content of the emulsion resin (a₂) was 71 weight %, that of the (b) was 2 weight %, and that of the (c) was 27 weight %, relative to the total nonvolatile content of emulsion resin (a₂), a water-soluble (meth)acrylic resin (b) and a polyether-modified carbodiimide (c).

### - Examples -

Hereinafter, the following examples were carried out, and then the test and the evaluation were performed. The method for the test and the evaluation is as follows.

### (Adhesion: checkerboard squares peeling test):

In accordance with JIS K5400, as to the test piece as obtained, the checkerboard squares peeling test with Sellotape (Scotch tape) (registered trade mark) was carried out. One hundred checkerboard squares of 2 mm × 2 mm were prepared, and the peeling test with Sellotape (Scotch tape) (registered trade mark) was carried out, and then the number of checkerboard squares as not peeled off was counted. The evaluation standard is as follows.
○: 0/100 (no peeling)
Δ: 1/100 to 50/100 (peeling by not more than 50 %)
×: 51/100 to 100/100 (peeling by not less than 51 %)

### (Humidity-resisting adhesion test):

The test piece as obtained was left under an atmosphere of 50 °C and 95 % in humidity for 10 days, and thereafter the above checkerboard squares peeling test was carried out.

### (Gasohol resistance test):

The test piece as obtained was immersed into gasohol as obtained by adding ethanol to regular gasoline in an amount of 10 volume %, and thereafter the peelability was evaluated by measuring how long time passed until the peeling of the coating film reached 2 mm of the edge portion. In the case where the aforementioned time was not less than 30 minutes, the result was described as ○. In the case where it was less than 30 minutes, the result was described as ×.

### (Orientation of aluminum pigment):

When a flat aluminum pigment is oriented to the coating-film face, the pigment is observed whitely brilliant in the case where the coating film is seen from the front, and the pigment is observed blackish in the case where the coating film is diagonally seen. Such a property is called flip-flop, and appearance that is high in this contrast is favorable. The contrast of Example 2 was defined as a passing standard O, and the evaluation was described as × in the case where the contrast was inferior to that of Example 2.

### [Example 1]:

A polypropylene material was coated with the aqueous primer coating composition (1) as obtained in Production Example 1 and the aqueous base paint composition (1) as obtained in Production Example 4 in the following way, thus preparing a test piece.

At first, the polypropylene material was washed with a neutral detergent, and water drop thereon was removed by air blowing. Thereafter, the aqueous primer coating composition (1) was coated onto this polypropylene material with a spray (dried-film thickness: 10 µm), and dried at 40 °C for 3 minutes. The resultant primer coating film had a nonvolatile content of 75 weight % after being cooled. Next, the aqueous base paint composition (1) was coated onto the primer coating film as obtained with a spray (dried-film thickness: 15 µm), and dried at 60 °C for 3 minutes. The resultant base coating film had a nonvolatile content of 65 weight %. Thereafter, a solvent-base two-component clear paint (R788-SHS produced by Nippon Paint Automotive Europe Co., Ltd.) was coated onto the base coating film as obtained by spray coating in such a manner that its dried-film thickness would be 30 µm. At the end, the baking treatment of the resultant three-layered coating film was carried out at 80 °C for 30 minutes, thus preparing a test piece.

As to the test piece as obtained, the checkerboard squares peeling test was carried out, thereby evaluating the adhesion. In addition, the humidity-resisting adhesion test was carried out, thereby evaluating the humidity-resisting adhesion. Furthermore, the gasohol resistance test was carried out, thereby evaluating the gasohol resistance. These results are listed in Table 1.

### [Example 2]:

A test piece was prepared in the same way as of Example 1 except that the aqueous base paint composition (2) as obtained in Production Example 5 was used instead of the aqueous base paint composition (1), and then it was evaluated. Furthermore, the orientation of the aluminum pigment was evaluated. The results are listed in Table 1.

### [Comparative Example 1]:

A test piece was prepared in the same way as of Example 1 except that the aqueous base paint composition (3) as obtained in Production Example 6 was used instead of the aqueous base paint composition (1), and then it was evaluated. Furthermore, the orientation of the aluminum pigment was evaluated. The results are listed in Table 1.

### [Comparative Example 2]:

A test piece was prepared in the same way as of Example 1 except that the aqueous base paint composition (4) as obtained in Production Example 7 was used instead of the aqueous base paint composition (1), and then it was evaluated. Furthermore, the orientation of the aluminum pigment was evaluated. The results are listed in Table 1.

### [Comparative Example 3]:

A test piece was prepared in the same way as of Example 2 except that the aqueous primer coating composition (2) as obtained in Production Example 2 was used instead of the aqueous primer coating composition (1), and then it was evaluated. Furthermore, the orientation of the aluminum pigment was evaluated. The results are listed in Table 1.

### [Comparative Example 4]:

A test piece was prepared in the same way as of Example 2 except that the aqueous primer coating composition (3) as obtained in Production Example 3 was used instead of the aqueous primer coating composition (1), and then it was evaluated. Furthermore, the orientation of the aluminum pigment was evaluated. The results are listed in Table 1.

**Table 1**

| | Example 1 | Example 2 | Comparative Example 1 | Comparative Example 2 | Comparative Example 3 | Comparative Example 4 |
|---|---|---|---|---|---|---|
| Adhesion | ○ | ○ | × | ○ | ○ | ○ |
| Humidity-resisting adhesion | ○ | ○ | × | ○ | ○ | × |
| Gasohol resistance | ○ | ○ | ○ | ○ | × | × |
| Orientation of aluminum pigment | - | ○ | ○ | × | ○ | ○ |

## Claims

1. A process for formation of a coating film on a plastic material, which comprises the steps of: coating the plastic material with an aqueous primer coating composition; and thereafter drying the resultant primer coating film in such a manner that its nonvolatile content will not be less than 70 weight %; and thereafter overcoating the primer coating film with an aqueous base paint composition; and thereafter drying the resultant base coating film in such a manner that its nonvolatile content will not be less than 60 weight %; and thereafter overcoating the base coating film with a two-component clear paint; and thereafter baking the resultant three-layered coating film onto the plastic material;
with the process being **characterized in that**: the aqueous base paint composition includes: an emulsion resin (a) as obtained by carrying out emulsion polymerization of an α,β-ethylenically unsaturated monomer mixture having a nonvolatile acid value of 3 to 50 mgKOH/g; a water-soluble (meth)acrylic resin (b) having a nonvolatile acid value of 110 to 200 mgKOH/g; and a polyether-modified carbodiimide (c); wherein the α,β-ethylenically unsaturated monomer mixture includes a (meth)acrylate ester in an amount of not smaller than 65 weight % wherein the (meth)acrylate ester has an ester portion containing 1 or 2 carbon atoms; and wherein: the nonvolatile content of the (a) is in the range of 55 to 75 weight %, that of the (b) is in the range of 0.5 to 15 weight %, and that of the (c) is in the range of 15 to 44.5 weight %, relative to the total nonvolatile content of the (a) to (c); and
the aqueous primer coating composition includes an acid-anhydride-modified chlorinated polyolefin emulsion resin (A), an aqueous urethane dispersion (B), an aqueous epoxy resin (C), and an organic strong base and/or its salt (D), wherein: the nonvolatile content of the (A) is in the range of 20 to 60 weight %, that of the (B) is in the range of 10 to 40 weight %, that of the (C) is in the range of 20 to 60 weight %, and the (D) is in the range of 1 to 5 weight % relative to the total nonvolatile content of the (A), (B), and (C).

2. A process according to claim 1, wherein the organic strong base is at least one member selected from the group consisting of 1,8-diazabicyclo[5.4.0]undecene-7 (DBU) and 1,5-diazabicyclo[4.3.0]nonene-5 (DBN).

3. A coated article, which is obtained by the process as recited in claims 1 or 2.

## Patentansprüche

1. Verfahren zur Bildung eines Beschichtungsfilms auf einem Kunststoffmaterial, das die Stufen: Beschichten des Kunststoffmaterials mit einer wässrigen Grundierungsbeschichtungszusammensetzung und danach Trocknen des gebildeten Grundierungsbeschichtungsfilms derart, dass dessen Gehalt an nichtflüchtigen Stoffen nicht weniger als 70 Gew.-% beträgt, und danach Überschichten des Grundierungsbeschichtungsfilms mit einer wässrigen Basislackzusammensetzung und danach Trocknen des gebildeten Basisbeschichtungsfilms derart, dass dessen Gehalt an nichtflüchtigen Stoffen nicht weniger als 60 Gew.-% beträgt, und danach Überschichten des Basisbeschichtungsfilms mit einem Zweikomponentenklarlack und danach Brennen des gebildeten dreilagigen Beschichtungsfilms auf das Kunststoffmaterial umfasst,
wobei das Verfahren **dadurch gekennzeichnet ist, dass**:
die wässrige Basislackzusammensetzung ein Emulsionsharz (a), das durch Durchführen einer Emulsionspolymerisation eines α,β-ethylenisch ungesättigten Monomerengemischs mit einem Säurewert der nichtflüchtigen Stoffe von 3 bis 50 mg KOH/g erhalten wurde, ein wasserlösliches (Meth)acrylharz (b) mit einem Säurewert der nichtflüchtigen Stoffe von 110 bis 200 mg KOH/g und ein polyethermodifiziertes Carbodiimid (c) umfasst,
wobei das α,β-ethylenisch ungesättigte Monomerengemisch einen (Meth)acrylatester in einer Menge von nicht weniger als 65 Gew.-% umfasst, wobei der (Meth)acrylatester einen 1 oder 2 Kohlenstoffatome enthaltenden Esterteil aufweist, und wobei der Gehalt an nichtflüchtigen Stoffen von (a) im Bereich von 55 bis 75 Gew.-%, der von (b) im Bereich von 0,5 bis 15 Gew.-% und der von (c) im Bereich von 15 bis 44,5 Gew.-%, bezogen auf den gesamten Gehalt an nichtflüchtigen Stoffen von (a) bis (c), liegt; und
die wässrige Grundierungsbeschichtungszusammensetzung ein säureanhydridmodifiziertes chloriertes Polyolefinemulsionsharz (A), eine wässrige Urethandispersion (B), ein wässriges Epoxyharz (C) und eine organische starke Base und/oder deren Salz (D) umfasst, wobei der Gehalt an nichtflüchtigen Stoffen von (A) im Bereich von 20 bis 60 Gew.-%, der von (B) im Bereich von 10 bis 40 Gew.-%, der von (C) im Bereich von 20 bis 60 Gew.-% und der von (D) im Bereich von 1 bis 5 Gew.-%, bezogen auf den gesamten Gehalt an nichtflüchtigen Stoffen von (A), (B) und (C), liegt.

2. Verfahren nach Anspruch 1, wobei die organische starke Base mindestens ein Bestandteil ist, der aus der Gruppe von 1,8-Diazabicyclo[5.4.0]undecen-7 (DBU) und 1,5-Diazabicyclo-[4.3.0]nonen-5 (DBN) ausgewählt ist.

3. Beschichteter Gegenstand, der durch das in Anspruch 1 oder 2 angegebene Verfahren erhalten wird.

## Revendications

1. Procédé de formation d'un film de revêtement sur une matière plastique, qui comprend les étapes de : revêtement de la matière plastique avec une composition de revêtement primaire aqueuse ; puis séchage du film de revêtement primaire résultant d'une manière telle que sa teneur en matières non volatiles ne sera pas inférieure à 70 % en poids ; puis deuxième revêtement du film de revêtement primaire avec une composition de peinture de base aqueuse ; puis séchage du film de revêtement de base résultant d'une manière telle que sa teneur en matières non volatiles ne sera pas inférieure à 60 % en poids ; puis deuxième revêtement du film de revêtement de base avec une peinture transparente à deux composants ; puis cuisson du film de revêtement à trois couches résultant sur la matière plastique ;
le procédé étant **caractérisé en ce que** : la composition de peinture de base aqueuse comprend : une résine d'émulsion (a) obtenue en effectuant la polymérisation en émulsion d'un mélange monomère α,β-éthyléniquement insaturé ayant un indice d'acidité des matières non volatiles allant de 3 à 50 mgKOH/g ; une résine (méth)acrylique hydrosoluble (b) ayant un indice d'acidité des matières non volatiles allant de 110 à 200 mgKOH/g ; et un carbodiimide modifié avec un polyéther (c) ; dans lequel le mélange monomère α,β-éthyléniquement insaturé comprend un ester de (méth)acrylate en une quantité pas plus faible que 65 % en poids dans lequel l'ester de (méth)acrylate a une portion d'ester contenant 1 ou 2 atomes de carbone ; et dans lequel : la teneur en matières volatiles de (a) est dans la gamme de 55 à 75 % en poids, celle de (b) est dans la gamme de 0,5 à 15 % en poids et celle de (c) est dans la gamme de 15 à 44,5 % en poids, par rapport à la teneur totale en matières non volatiles de (a) à (c) ; et
la composition de revêtement primaire aqueuse comprend une résine d'émulsion polyoléfinique chlorée modifiée avec de l'anhydride acide (A), une dispersion d'uréthane aqueuse (B), une résine époxy aqueuse (C) et une base forte organique et/ou son sel (D), dans lequel : la teneur en matières volatiles de (A) est dans la gamme de 20 à 60 % en poids, celle de (B) est dans la gamme de 10 à 40 % en poids, celle de (C) est dans la gamme de 20 à 60 % en poids et celle de (D) est dans la gamme de 1 à 5 % en poids, par rapport à la teneur totale en matières non volatiles de (A) , (B) et (C).

2. Procédé selon la revendication 1, dans lequel la base forte organique est au moins un élément choisi dans le groupe constitué par le 1,8-diazabicyclo[5.4.0]undécène-7 (DBU) et le 1,5-diazabicyclo[4.3.0]nonène-5 (DBN).

3. Article revêtu, qui est obtenu par le procédé tel que décrit dans les revendications 1 ou 2.
